# EUROPEAN PATENT APPLICATION

(11) **EP 4 717 609 A1**
(43) Date of publication of application: **01.04.2026**
(21) Application number: 25205678.3
(22) Date of filing: 30.09.2025
(51) Int. Cl.: B64G 1/10, B64G 1/64, B64G 4/00

(54) **SYSTEMS AND METHODS FOR AN AUXILIARY SERVICES INTERFACE**

(30) Priority: 30.09.2024 US 202463701181 P
(71) Applicant: MacDonald, Dettwiler and Associates Inc., Brampton, Ontario L6Y 6K7 (CA)
(72) Inventor: SACHDEV, Tej Singh, Brampton, L6Y 6K7 (CA); POP, Alin, Brampton, L6Y 6K7 (CA); KER, Heather, Brampton, L6Y 6K7 (CA); CASS, Charles, Brampton, L6Y 6K7 (CA); ACHARYA, Ishan, Brampton, L6Y 6K7 (CA)
(74) Representative: Mewburn Ellis LLP

(57) **Abstract**

A robotically-compatible interface system for providing auxiliary services to payloads is provided. The system includes a passive mating including an aiignment plate and a passive-side auxiliary service connector coupled to the alignment plate and an active mating assembly including a torque input shaft, a lead screw coupled thereto rotating in response to received torque input, a mating plate translating via rotation of the lead screw, and at least one active-side auxiliary service connector coupled to the mating plate, the auxiliary service connectors configured to mate and transfer fluid or power. Translation of the plates aligns the active and passive mating assemblies parallel to one another and the at least one active-side auxiliary service connector and at least one passive-side auxiliary service connector are coarsely or substantially aligned. Rotation of the lead screw after alignment further translates the plates such that the service connectors mate.

## Description

### Technical Field

The following relates generally to auxiliary services interfaces, and more particularly to auxiliary services interfaces (ASI) suitable for facilitating receiving and connecting payloads.

### Introduction

In the field of in-space servicing, standardization is desirable in order to allow autonomous robotic movement. For example, given a robust primary interface (e.g., that interfaces with a payload), it is desirable to provide an auxiliary services interface for providing auxiliary services to the payload, the payload host or platform, and/or to the primary interface.

Such additional services may require high insertion force driven by a secondary mechanism to mate and de-mate the components providing the auxiliary services. Providing an ASI that provides the services or components and is able to mate and de-mate same may advantageously allow the payload to be operable at or with the primary interface.

Standardization of such an ASI may advantageously allow autonomous robotic movement to avoid collisions (e.g., with the payload, with the primary interface, with space debris). Such standardization may further allow interoperability and interchangeability as between the payload, payload host, and/or the primary interface on the one hand and one or more ASI's on the other.

Accordingly, systems and methods for an ASI are desired that overcome at least some disadvantages of existing auxiliary services interfaces.

### Summary

A system for autonomously mating auxiliary services of a payload with a spacecraft across an auxiliary service interface including a payload half and a first spacecraft half is provided. The system includes one or more payload-side auxiliary service connectors, respective one or more spacecraft-side auxiliary service connectors for connecting with the one or more payload-side auxiliary service connectors, a mating plate on the payload half configured to be driven towards an alignment plate on the first spacecraft half, the one or more payload-side auxiliary service connectors disposed on the mating plate and the respective one or more spacecraft-side auxiliary service connectors disposed on the alignment plate, and capture arms disposed on the payload half configured to be driven into contact with the alignment plate to bring the one or more payload-side auxiliary service connectors on the mating plate into coarse alignment with the respective one or more spacecraft-side auxiliary service connectors on the alignment plate. The one or more payload-side auxiliary service connectors are configured to mate with the respective one or more spacecraft-side auxiliary service connectors when the connectors are in fine alignment until the auxiliary services interface reaches a self-locking state, and in the self-locking state the one or more payload-side auxiliary service connectors are fully mated to the respective one or more spacecraft-side auxiliary service connectors and are retained in a mated state.

The payload half may further include an input shaft configured to receive a torque input to drive the mating plate towards the alignment plate, to drive the capture arms into contact with the alignment plate, and to cause the one or more payload-side auxiliary service connectors to engage with the respective one or more spacecraft-side auxiliary service connectors.

The payload half may further include a screw coupled to the input shaft, and torque may be provided to the input shaft to rotate the screw.

The torque may be provided via a torque-driving tool operated by a robot or by a human.

The system may further include rollers for driving the capture arms, the rollers configured to be actuated as the mating plate is driven towards the alignment plate.

The capture arms may be configured to latch onto projections of the alignment plate.

The capture arms may be configured to latch onto catches of the alignment plate.

The system may further include a grapple fixture for engaging with an end effector of a robotic arm, and the robotic arm may be configured to grapple the payload half of the auxiliary services interface and move the auxiliary services interface to a second spacecraft half located on a spacecraft at a location different to a location on the spacecraft of the first spacecraft half.

The auxiliary services may be autonomously mated when the torque is applied in a first direction, and the auxiliary services may be autonomously de-mated when the torque is applied in a second direction opposite to the first direction.

For each respective pair of connectors among the one or more payload-side auxiliary service connectors and the one or more spacecraft-side auxiliary service connectors, at least one connector may have a capture and alignment capability with the other connector for accommodating error and allowing self-alignment, thereby achieving the fine alignment.

A method of autonomously mating auxiliary services of a payload with a spacecraft across an auxiliary services interface including a payload half and a first spacecraft half is provided. The method includes driving a mating plate on the payload half towards an alignment plate on the first spacecraft half, the mating plate including one or more payload-side auxiliary service connectors and the alignment plate including one or more spacecraft-side auxiliary service connectors, driving capture arms on the payload half into contact with the alignment plate to bring the one or more payload-side auxiliary service connectors on the mating plate into coarse alignment with the respective one or more spacecraft-side auxiliary service connectors on the alignment plate, and mating the one or more payload-side auxiliary service connectors with the respective one or more spacecraft-side auxiliary service connectors, when the connectors are in fine alignment, until the auxiliary services interface reaches a self-locking state. In the self-locking state the one or more payload-side auxiliary service connectors are fully mated to the respective one or more spacecraft-side auxiliary service connectors and are retained in a mated state.

The method may further include providing a torque input to drive an input shaft on the payload half, and providing the torque input may drive the mating plate towards the alignment plate, may drive the capture arms into contact with the alignment plate, and may cause the one or more payload-side auxiliary service connectors to engage with the respective one or more spacecraft-side auxiliary service connectors.

The method may further include providing the torque input to rotate a screw coupled to the input shaft.

The torque may be provided via a torque-driving tool operated by a robot or by a human.

The capture arms may be driven by rollers that are actuated as the mating plate is driven towards the alignment plate.

The capture arms may be configured to latch onto projections of the alignment plate.

The capture arms may be configured to latch onto catches of the alignment plate.

The method may further include a grapple fixture of the auxiliary services interface engaging with an end effector of a robotic arm, and the robotic arm may be configured to grapple the payload half of the auxiliary services interface and move the auxiliary services interface to a second spacecraft half located on a spacecraft at a location different to a location on the spacecraft of the first spacecraft half.

The auxiliary services may be autonomously mated when the torque is applied in a first direction, and the auxiliary services may be autonomously de-mated when the torque is applied in a second direction opposite to the first direction.

For each respective pair of connectors among the one or more payload-side auxiliary service connectors and the one or more spacecraft-side auxiliary service connectors, at least one connector may have a capture and alignment capability with the other connector for accommodating error and allowing self-alignment, thereby achieving the fine alignment.

The mating plate may be driven by a drive system configured to convert rotary motion into linear motion.

The rotary motion may be supplied by rotation of an input shaft connected to the drive system in response to an externally supplied torque.

The self-locking state may be established by a self-locking mechanism configured to prevent the payload-side auxiliary service connectors from de-mating from the spacecraft-side auxiliary service connectors when the externally supplied torque is stopped.

The self-locking mechanism may be a Sarrus linkage.

A robotically-compatible interface system for providing auxiliary services to payloads is provided. The system includes an active mating assembly and a passive mating assembly for mating and de-mating an auxiliary service between a work site and a payload, the passive mating assembly including an alignment plate and at least one passive-side auxiliary service connector coupled to the alignment plate, the active mating assembly including an input shaft for receiving a torque input, a lead screw coupled to the input shaft that rotates in response to the received torque input at the input shaft, a mating plate coupled to the lead screw that translates via rotation of the lead screw, and at least one active-side auxiliary service connector coupled to the mating plate, the at least one active-side auxiliary service connector and the at least one passive-side auxiliary service connector being configured to mate and transfer at least one of fluid and power across the interface when mated, the translation of the mating plate towards the alignment plate aligning the active and passive mating assemblies such that the mating plate and the alignment plate are parallel to one another and the at least one active-side auxiliary service connector and at least one passive-side auxiliary service connector are coarsely or substantially aligned. Further rotation of the lead screw after alignment is achieved further translates the mating plate towards the alignment plate such that the at least one active-side auxiliary service connector mates with the at least one passive-side auxiliary service connector.

An auxiliary services interface system is provided. The system includes a platform side (ASI-p) and a receptacle side (ASI-r) configured for selective mating and de-mating, the ASI-p including an input shaft for receiving an input torque, an active mating subassembly including a lead screw configured to rotate in one direction and cause translation in the mating direction when the input shaft receives the input torque in a first direction to mate the ASI-p and the ASI-r and configured to rotate in a second direction opposite to the first direction and cause translation opposite the mating direction when the input shaft receives the input torque in a second direction to de-mate the ASI-p and the ASI-r, a linkage mechanism configured to enter a self-locking state when second and third links cross past an over-center configuration, putting a first link in tension, in a direction orthogonal to an axis of the lead screw, thereby eliminating any back-driving force on the lead nut, creating the self-locking condition, the linkage mechanism including first, second, and third links, and a mating plate connected to and travelling with the linkage mechanism. When the lead screw reaches the locking position, the first link is approximately perpendicular under tension and the second and third links are approximately colinear under compression. The system further includes capture arms for capturing alignment features in a capture window to effect coarse alignment of the ASI-p and ASI-r, the capture arms including a lever configured to be actuated by roller arms to facilitate the selective de-mating, the roller arms for actuating the capture arms to capture the alignment features, at least one auxiliary service connector disposed on the mating plate which, when connected, facilitates a transfer of energy and data through the ASI-p and the ASI-r. The ASI-r includes a passive mating subassembly including the alignment features, an alignment plate, and at least one auxiliary service connector disposed on the alignment plate for receiving the at least one connector disposed on the mating plate. In coarse alignment the at least one auxiliary service connector disposed on the mating plate is positioned approximately above the at least one auxiliary service connector disposed on the alignment plate. In fine alignment the at least one auxiliary service connector on the mating plate is engaged with the at least one auxiliary service connector disposed on the alignment plate.

The at least one connector disposed on the mating plate may include a mating electrical connector, and the at least one connector disposed on the alignment plate may include an alignment electrical connector.

The electrical connector may transmit power and/or data.

A fiberoptic connector may be provided to transmit the data via a fiberoptic coupling. The services may include fiberoptic (data) services.

The at least one connector disposed on the mating plate may include a mating fluid connector, and the at least one connector disposed on the alignment plate may include an alignment fluid connector.

A method for mating two halves of an auxiliary services interface (ASI), the ASI including a platform side (ASI-p) and a receptacle side (ASI-r) configured for selective mating and de-mating, the method including engaging an input shaft on the ASI-p to apply torque to a double universal joint drive shaft coupled with a lead screw and a lead nut to drive a linkage mechanism, the linkage mechanism including links, the lead screw rotating, the lead screw nut translating, and the links increasing the mechanical advantage from the lead screw and the lead nut and facilitating the self-locking condition, the driven lead screw driving the linkage mechanism to further drive a mating plate of the ASI-p towards an alignment plate of the ASI-r, rollers on the mating plate actuating capture arms to align toward alignment features on the alignment plate by travelling in a mating direction along a surface of the capture arms to cause the capture arms to swing towards and engage with the ASI-r, adjusting the mating plate through one or more compliance mechanisms to position at least one connector disposed on the mating plate approximately above a corresponding at least one connector disposed on the alignment plate to achieve coarse alignment, the at least one connector disposed on the mating plate engaging with the at least one connector disposed on the alignment plate to achieve fine alignment, and creating a self-locking state in the linkage mechanism when second and third links cross past an over-center configuration, putting a first link in tension, in a direction orthogonal to an axis of the lead screw, thereby eliminating any back-driving force on the lead nut, creating the self-locking condition.

The capture arms may further include a lever configured to be actuated by the rollers to facilitate the selective de-mating.

The at least one connector disposed on the mating plate may include a mating electrical connector, and the at least one connector disposed on the alignment plate may include an alignment electrical connector.

The electrical connector may transmit power and/or data.

A fiberoptic connector may be provided to transmit the data via a fiberoptic coupling. The services may include fiberoptic (data) services.

The at least one connector disposed on the mating plate may include a mating fluid connector, and the at least one connector disposed on the alignment plate may include an alignment fluid connector.

A method for de-mating two halves of an auxiliary services interface (ASI) is provided, the ASI including a platform side (ASI-p) and a receptacle side (ASI-r) configured for selective mating and de-mating, the ASI provided in a self-locking state, the self-locking state provided when second and third links cross past an over-center configuration, putting a first link in tension, in a direction orthogonal to an axis of the lead screw, thereby eliminating any back-driving force on the lead nut, creating the self-locking condition, the method including releasing the self-locking state in the linkage mechanism by removing the self-locking condition, disengaging at least one connector disposed on a mating plate of the ASI-p from at least one connector disposed on the ASI-r, rollers on the payload half actuating capture arms to align away from alignment features by travelling opposite the mating direction along a surface of the capture arms to cause the capture arms to swing away from and disengage with the alignment features, the capture arms further including a lever configured to be actuated by the rollers to facilitate the selective de-mating, driving a lead screw nut opposite the mating direction by rotating a lead screw to drive the linkage mechanism, the linkage mechanism further including the second and third links, to further drive the mating plate away from the alignment plate, and releasing an input shaft to cease applying torque to a double universal joint drive shaft coupled with the lead screw on the ASI-p, the lead screw rotating, the lead screw nut ascending, and the links bending.

The at least one connector disposed on the mating plate may include a mating electrical connector, and the at least one connector disposed on the alignment plate may include an alignment electrical connector.

The electrical connector may transmit power and/or data.

A fiberoptic connector may be provided to transmit the data via a fiberoptic coupling. The services may include fiberoptic (data) services.

The at least one connector disposed on the mating plate may include a mating fluid connector, and the at least one connector disposed on the alignment plate may include an alignment fluid connector.

An auxiliary services interface system for providing an auxiliary service to a payload is provided, the system including an active interface module and a passive interface module, the active and passive interface modules configured to mate to enable provision of the auxiliary service to the payload through the mated active and passive interface modules in a mated configuration, a first auxiliary service connector on the active interface module and a second auxiliary service connector on the passive interface module, the first and second auxiliary service connectors configured to mate such that energy is transferable across the mated connector interface, an over centering linkage mechanism disposed in the active interface module and including a modified Sarrus mechanism including a plurality of links each of which is driven over-center in the mated configuration, the links creating a self-locking state at an end of travel to prevent resistive forces from de-mating the auxiliary services.

A method of providing an auxiliary service to a payload across an auxiliary services interface is provided. The method includes providing a torque input to drive an input shaft on an active interface module including a tie-down mechanism including a lead screw and a Sarrus linkage assembly, driving a mating plate on the active interface module towards an alignment plate on a passive interface module via the tie-down mechanism, driving capture arms on the active interface module into contact with the alignment plate to bring an auxiliary service connector on the mating plate into alignment with an auxiliary service connector on the alignment plate, and mating the auxiliary service connectors via continued travel of the tie-down mechanism until the Sarrus linkage assembly reaches a self-locking state. In the self-locking state (i) the auxiliary service connectors are fully mated, (ii) the tie-down mechanism is at an end of travel, and (iii) the Sarrus linkage assembly prevents resistive forces from unmating the auxiliary service connectors.

The lead screw may rotate and a lead screw nut may be driven axially by a torque input from an end effector grappling the input shaft, and the axial movement of the lead screw nut may drive the Sarrus linkage assembly.

Other aspects and features will become apparent, to those ordinarily skilled in the art, upon review of the following description of some exemplary embodiments.

### Brief Description of the Drawings

The drawings included herewith are for illustrating various examples of articles, methods, and apparatuses of the present specification. In the drawings:
Figure 1 is a block diagram of an auxiliary services interface system, according to an embodiment;
Figure 2 is a block diagram of an alignment, mating, and locking subassembly of the auxiliary services interface system of Figure 1, according to an embodiment;
Figures 3A and 3B are perspective views of the auxiliary services interface of Figure 1, in unmated and partially mated configurations, respectively, according to an embodiment;
Figure 4 is a perspective view of the auxiliary services interface of Figures 3A-3B interfacing with a payload platform interfacing with a primary interface, according to an embodiment;
Figure 5 is a partial close-up front view of the auxiliary services interface of Figure 3, according to an embodiment;
Figure 6 is a close-up perspective view of part of an alignment, mating, and locking subassembly of the ASI of Figures 3A-3B interfacing with part of the passive mating subassembly of the ASI of Figures 3A-3B, according to an embodiment;
Figures 7A and 7B are front views of another part of the alignment, mating, and locking subassembly and the passive mating subassembly of the ASI of Figures 3A-3B before and after coarse alignment, respectively, according to an embodiment;
Figure 8 is an elevated perspective view of a lateral compliance mechanism of the auxiliary services interface of Figures 3A-3B, according to an embodiment;
Figure 9 is a perspective view of an axial compliance mechanism of the auxiliary services interface of Figures 3A-3B in isolation, according to an embodiment;
Figure 10 is a flow chart of a method of mating the two halves of the auxiliary services interface of Figure 1, according to an embodiment;
Figure 11 is a flow chart of a method of de-mating the two halves of the auxiliary services interface of Figure 1, according to an embodiment;
Figure 12 is a perspective view of an auxiliary services interface in a partially mated configuration, according to another embodiment; and
Figure 13 is a front view of an alignment, mating, and locking subassembly of the ASI of Figure 12 interfacing with part of the passive mating subassembly of the ASI of Figure 12, according to another embodiment.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

Further, although process steps, method steps, algorithms or the like may be described (in the disclosure and / or in the claims) in a sequential order, such processes, methods and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

When a single device or article is described herein, it will be readily apparent that more than one device / article (whether or not they cooperate) may be used in place of a single device / article. Similarly, where more than one device or article is described herein (whether or not they cooperate), it will be readily apparent that a single device / article may be used in place of the more than one device or article.

The following relates generally to auxiliary services interfaces, and more particularly to auxiliary services interfaces (ASI) suitable for facilitating receiving and connecting payloads for the transfer of energy and data across the interface.

The ASI of the present disclosure facilitates provision of auxiliary services, such as fluid and power/energy and data transfer, between a payload and host in a modular fashion. The ASI advantageously overcomes high mating forces, and problems with conventional connector design. The ASI includes a tie-down mechanism. The tie-down mechanism may include a modified Sarrus linkage assembly including any one or more of bushings and further design features to achieve a higher mechanical advantage, while remaining within a suitable volume. The ASI further includes compliance mechanisms. The ASI includes a capture arm for effecting capture between and coarse alignment of a top half (i.e., payload half) and a bottom half (i.e., spacecraft half) of the ASI (ASI-p and ASI-r, respectively including a mating plate and an alignment plate) of the ASI within a capture window and subject to misalignment. Fine alignment or mating between ASI-p and ASI-r includes the coupling of electrical connectors (each an EC and together the EC's) and quick-disconnect fluid connectors (each an FC and together the FC's).

The modified Sarrus linkage assembly further provides guidance for linear motion that enables a single input to drive several connections together simultaneously, despite imbalance in the forces available for mating the connections.

The ASI capture mechanism guides the ASI-p into coarse alignment with the ASI-r via travel of the compliance mechanisms and via a capture mechanism. The ASI capture mechanism holds the ASI-p and ASI-r together such that the resistive loads from the FC's and EC's are reacted locally to achieve mating and fine alignment of the ASI. The capture mechanism includes ASI-p capture arms engaging with corresponding features on the ASI-r to cause the intended motion from the compliance mechanisms, leading to global alignment. The capture arms fully swing to mate with the capture features, holding the ASI-p and ASI-r together, both axially and laterally. This process of compliance and capture occurs during a first distance (e.g., the first 10 mm) of the mating plate translating towards the alignment plate, prior to the engagement of the FC's and electrical connectors.

The ASI advantageously allows payloads to connect to auxiliary services that have high reaction loads.

An optional mechanism may be attached to the platform to provide modular auxiliary service connectivity between a payload and host, which can be mated/de-mated via a secondary interface.

The ASI and/or system including the ASI includes features that self-lock the ASI and/or the system at the end of travel (of the ASI-p relative to the ASI-r). The self-locking feature prevents the auxiliary services from de-mating once a robotic end effector unlatches or otherwise detaches from the ASI and/or from the system. The self-locking feature allows the input drive to be turned off after mating such that constant holding in the mated state is not required to keep the interface mated, thus enabling the robot to disengage.

The ASI-p and the ASI-r provide standardized auxiliary services interfaces for use in deep space.

The following relates to a standard auxiliary services interface that allows auxiliary services interfacing and actuation by a compatible robot. Such standard auxiliary services interface may also be actuated by other compatible techniques (including standard hand tools, or purpose-built interfacing tools (non-robotic) that are compatible with the interface). In a preferred embodiment, the standard auxiliary services interface utilizes a torque input to drive the ASI mechanism. In other embodiments, the standard electrical portion of the auxiliary services interface is used, and the ASI is driven via its own motor. The motor may also be controlled via the primary interface or via the payload, and the ASI interface may accordingly not be used.

A mechanism that aligns and latches the platform side of the ASI to the receptacle side is provided, the mechanism limiting the loads that are transmitted to the platform side, which is a key advantage due to the limitations of other systems and components that are part of the higher assembly, including those that are subject to high loads during launch.

In an embodiment, there are provided rotating or swinging latches that interact with catches on the receptacle side, which, in combination, cause initial or coarse alignment of the platform side to the receptacle side and simultaneously structurally connect the two sides such that a significant portion of the loads are contained within a sub-set of the ASI components and not transmitted to other components. In an embodiment, the latches are configured to move linearly.

The input or actuation mechanism is a drive screw (i.e., a lead screw or a ball screw) for converting the rotational input into linear motion and to increase the mechanical advantage, which drives a linkage mechanism which further increases the mechanical advantage. In an embodiment, alternate drive mechanisms other than drive screws and/or linkages are provided.

The linear output of the linkage mechanism also actuates the latches, via rollers. The latches may be activated via additional linkages.

In a preferred embodiment, the linkage mechanism is driven to an over-center position in the fully mated state, to result in a self-locking condition, which prevents backdriving (e.g., of a ballscrew) to an unmated state in the absence of any input torque.

In another embodiment, the system is provided without the foregoing self-locking functionality, e.g., depending on the mating forces of the services and/or the inclusion of other features that preclude backdriving (e.g. low efficiency lead screw).

With alignment and structural connection completed, the mechanism provides further linear motion to mate the services, by driving the ASI-p interface plate towards the ASI-r interface plate, with the linkage mechanism implemented such that it constrains the motion linearly.

Each of the services includes respective mechanisms for capture, alignment, and/or compliance that include features on both sides of the interface (for capture alignment) or mechanisms on one or both sides, to overcome any residual misalignment between the ASI-p and ASI-r interface plates after latching.

The platform side includes a set of components that allow limited amounts of motion in all six degrees of freedom (DOF) (referred to herein as "compliance"), to facilitate alignment of the ASI-p interface plate to the ASI-r interface plate during latching. In a preferred embodiment, gaps and/or clearances are provided, though other embodiments may include rotary and/or linear flexures, bushings/bearings, or any suitable combination/components for providing limited motion. The amount of motion is limited to correspond with the capture capability between the hooks and catches. In order to reduce the total possible range of misalignments that the hooks and catches accommodate, the compliance is biased along a single DOF by springs. The biasing is in the axis with the greatest possible variances in position (manufacturing tolerances, thermal distortions).

Other embodiments may provide for larger capture capability and may not include biasing.

Still other embodiments may provide for reduced capture capability and may include biasing in more than one DOF.

Still other embodiments may utilize centering rather than biasing, or a combination of the two in different DOF.

The components that allow compliance are adjustable at assembly to accommodate variations in manufacturing tolerances, after all influencing components are assembled (i.e., each instance is customized based on its own as-built results to adjust the compliance range about a nominal standard location).

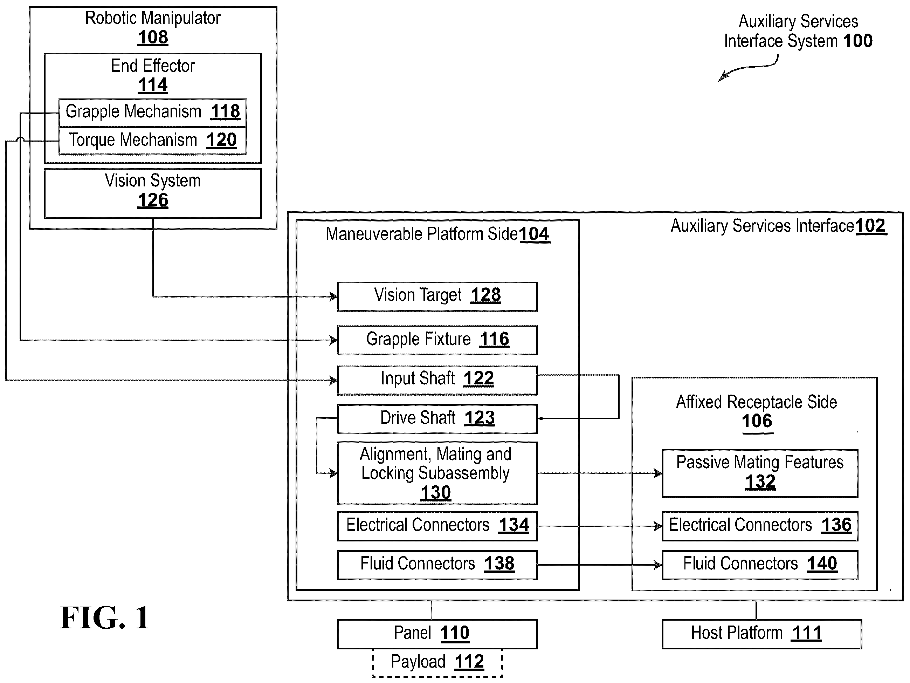

Referring now to Figure 1, shown therein is a system 100 including an auxiliary services interface 102 (the ASI 102) for delivery auxiliary services such as power and fluid between a host platform 111 and a payload 112, according to an embodiment.

The ASI 102 includes a maneuverable platform side 104 (the "ASI-p 104") and an affixed axis side 106 (the "ASI-r 106"). The maneuverable platform side 104 is moved by a robotic manipulator 108.

The ASI-p 104 and the ASI-r 106 are adapted to selectively mate and de-mate, as will be further described herein.

The ASI-p 104 is adapted to be aligned, mated, locked, and de-mated using an input torque from a robotic end effector 114 of the robotic manipulator 108.

The ASI 102 provides or transmits auxiliary services between a work site and a payload 112. A work site is a location where the ASI-r 106 is permanently affixed to a host. The ASI-r 106 is adapted to be affixed or otherwise connected to one of the plurality of platforms 110, as will be further described herein.

The ASI 102 allows for structural, fluid, thermal, mechanical, and electrical (power/energy and data) connectivity and de-connectivity between the payload 112 and the ASI-r 106. The ASI 102 may include one, both, or none of fluid and electrical (power/energy and data) connectivity.

Such electrical connectivity may include both power (electricity) and data. The ASI 102 may further include a fiberoptic connector (not shown) to transmit the data via a fiberoptic coupling. The services may include fiberoptic (data) services.

Such data connectivity may include optical data, e.g., a fiberoptic coupling.

The plurality of platforms 110 include a payload panel 110 for receiving and retaining the payload 112. The payload 112 may have fluid and/or electrical (power/energy and data) connectivity or may require fluid and/or electrical (power/energy and data) connectivity.

The payload panel 110 may include a designated design volume space that the ASI 102 and/or the robotic manipulator 108 do not enter into in operation. The payload panel 110 may include specific zones that the ASI 102 and/or the robotic manipulator 108 do not enter or pass through in operation.

The plurality of platforms 110 further includes a host platform 111 for hosting the ASI 102. In an embodiment, the host platform 111 hosts the ASI-r 106 and does not directly host the ASI-p 104.

The ASI 102 may be considered a secondary auxiliary services interface and thus may form part of a broader auxiliary services interface. The broader auxiliary services interface may allow for autonomous mating/de-mating and maneuvering of the payload 112 via a standardized primary interface. A primary interface may allow for robotic maneuvering and temporary stowage of the payload panel 110. The primary interface may be the auxiliary services interface disclosed in US Provisional Patent Application No. 63/548903, the contents of which are incorporated herein by reference.

The connection of the ASI-r 106 to the host platform 111 may be independent of the selective mating and de-mating of the ASI-p 104 with the ASI-r 106. The ASI-r 106 may remain affixed or otherwise connected to the host platform 111 before and/or after the ASI-p 104 and the ASI-r 106 de-mate. The connection of the ASI-r 106 to the host platform 111 may be more permanent than the selective mating of the ASI-p 104 and the ASI-r 106. The ASI-r 106 may remain mated to the ASI-p 104 after the ASI-r 106 disconnects from or is no longer affixed to the host platform 111.

The ASI 102 may be affixed to or otherwise connected to the host platform 111 as an entire or integral ASI 102, i.e., the ASI-p 104 and the ASI-r 106 may first selectively mate and subsequently the ASI-r 106 may be affixed to or otherwise connected to the host platform 111.

The robotic manipulator 108 includes the end effector 114 for interacting with the ASI-p 104.

The ASI-p 104 includes a grapple fixture 116 for interacting with a grapple mechanism 118 of the end effector 114. The grapple mechanism 118 grapples the grapple fixture 116 and rigidizes the grapple fixture 116, thereby rigidizing the ASI-p 104 to the end effector 114 and robotic manipulator 108. In an embodiment, the grapple fixture 116 includes a probe for grappling and a base to which the probe is mounted and which includes alignment features that promote alignment (via a coupling element on the end effector 114 that has a complementary profile and which couples to the base).

The ASI-p 104 further includes an input shaft 122. The input shaft 122 may be a hex shaft. In an embodiment, the input shaft 122 is a tie down bolt. The tie down bolt may be a hex bolt.

The ASI-p 104 further includes a drive shaft 123 connected to the input shaft 122. The end effector 114 further includes a torque mechanism 120 for supplying torque to the input shaft 122 to be further received at the drive shaft 123. The end effector 114 may transfer torque to input shaft 122 via torque mechanism 120 when the grapple mechanism 118 has captured and rigidized the grapple fixture 116.

The drive shaft 123 may be directly connected to the input shaft 122 such that output (e.g., torque) transmitted by the input shaft 122 is transmitted to and received at the drive shaft 123.

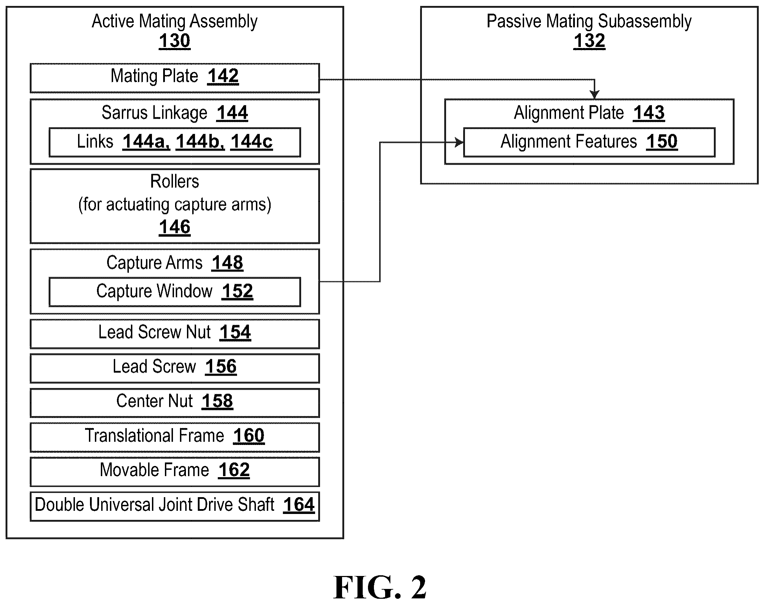

The drive shaft 123 is connected to a lead screw 156 on which a lead screw nut 154 travels (discussed further in relation to Figure 2). The drive shaft 123 is configured to transfer torque while input and output axes of the ASI 102 are misaligned because the axis of the input shaft 122 remains in the same position while the axis of the lead screw 156 translates under coarse alignment.

In an embodiment, a ball screw (not shown) is used in place of the lead screw 156.

Any suitable drive system configured to translate rotary motion into linear motion may be used in place of the lead screw 156.

The drive shaft 123 includes a universal joint (not shown) on each end.

In an embodiment, the input shaft 122 is a hex bolt and the torque mechanism 120 includes a complementary shaped socket (hex socket).

The robotic manipulator 108 further includes a vision system 126 for guiding the robotic manipulator 108 to or towards the ASI-p according to a vision target 128 on the ASI-p 104.

The ASI-p 104 further includes an alignment, mating, and locking subassembly 130 (also referred to as the active mating subassembly 130) for interfacing with passive mating features 132 (also referred to as the passive mating subassembly 132) of the ASI-r 106.

The alignment, mating, and locking subassembly 130 interfaces with the passive mating features 132 to selectively mate and de-mate the ASI-p 104 to and from the ASI-r 106 (and thus selectively mate and de-mate auxiliary services including auxiliary electrical services and auxiliary fluid services).

The alignment, mating, and locking subassembly 130 further cooperates with the passive mating features 132 to align the ASI-p 104 to the ASI-r 106 before mating and to reversibly lock the ASI-p 104 to the ASI-r 106 after mating. The alignment, mating, and locking subassembly 130 and the passive mating features 132 will be further described in Figure 2.

The ASI-p 104 includes electrical connectors 134 for connecting to electrical connectors 136 of the ASI-r 106. The electrical connectors 134 transmit electricity and/or data to the electrical connectors 136. The electrical connectors 136 transmit the electricity and/or the data to the payload 112.

The ASI-p 104 includes fluid connectors 138 for connecting to fluid connectors 140 of the ASI-r 106. The fluid connectors 138 transmit fluid to the fluid connectors 140. The fluid connectors 140 transmit the fluid to the payload 112. The fluid connectors 138 and 140 are two halves of the same fluid connector sub-assembly. Both 138 and 140 seal fluid independently, and when mated together allow the transfer of fluid across the ASI 102.

The electrical connectors 134 and the fluid connectors 138 are disposed in or on a mating plate 142.

The electrical connectors 136 and the fluid connectors 140 are disposed in or on an alignment plate 143.

In an embodiment, the ASI 102 includes the electrical connectors 134, 136 and does not include the fluid connectors 138, 140. In an embodiment, the ASI 102 includes the fluid connectors 138, 140 and does not include the electrical connectors 134, 136. In an embodiment, the ASI 102 includes the electrical connectors 134, 136 and the fluid connectors 138, 140.

Referring now to Figure 2, shown therein is a block diagram of the active mating subassembly 130 and the passive mating subassembly 132 of the auxiliary services interface system 100 in further detail, according to an embodiment. To aid in clarity of presentation, some features previously labelled and discussed may not be labelled and discussed again.

The active mating subassembly 130 includes the mating plate 142 that moves toward the corresponding alignment plate 143 of the passive mating subassembly 132 during mating and moves away therefrom during de-mating.

The movement of the mating plate 142 towards the alignment plate 143 brings together further features of the active mating subassembly 130 and the passive mating subassembly 132 to facilitate coarse alignment, as will be further explained.

The active mating subassembly 130 further includes a lead screw 156 for rotation adjacent a lead screw nut 154. In response to torque input received at the input shaft 122 from the torque mechanism 120, the lead screw 156 rotates, driving the active mating subassembly 130, specifically the mating plate 142, in the mating direction towards the passive mating subassembly 132, specifically the alignment plate 143.

The mating plate 142 accordingly drives the capture arms 148 (discussed hereinbelow) into contact with the alignment plate 143. This generates forces across an interface formed thereat to correct misalignments of the active mating subassembly 130 and the passive mating subassembly 132 via compliance mechanisms (discussed hereinbelow). This allows the electrical connectors 134 and the fluid connectors 138 to mate with the electrical connectors 136 and the fluid connectors 140, respectively, with continued mechanism travel until the system 100 reaches a self-locking state.

In an embodiment, a six-degree of freedom (6DOF) coupling mediates between the input shaft 122 and the lead screw 156. The 6DOF coupling may be a double-joint universal coupling. The 6DOF coupling may be a modified Oldham coupling.

The lead screw 156 advantageously has a high coefficient of friction and lead angle to render the system 100 non-back-drivable.

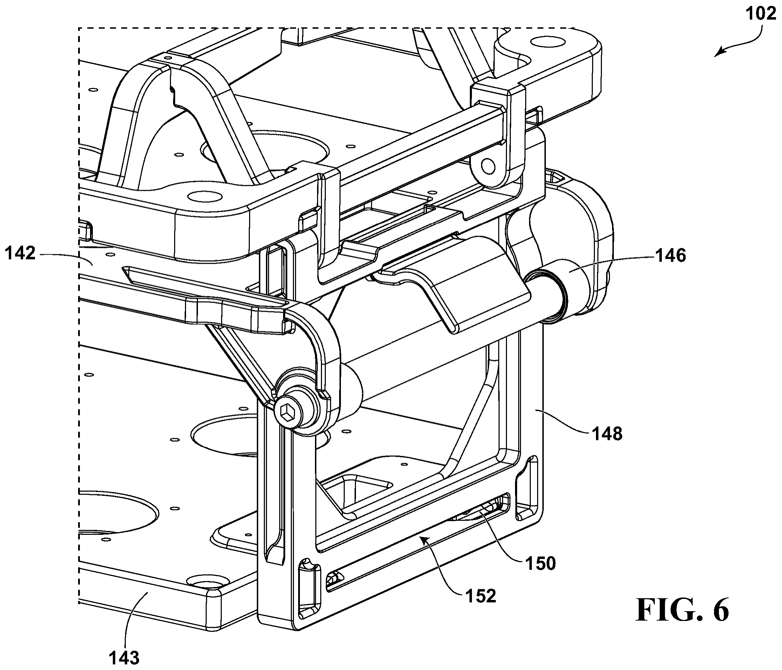

The active mating subassembly 130 further includes a Sarrus linkage 144 (or modified Sarrus mechanism 144) including links 144a, 144b, and 144c (collectively referred to as the links 144 and generically referred to as the link 144). The Sarrus linkage 144 provides a mechanical advantage when the ASI-p 104 and the ASI-r 106 mate. The Sarrus linkage 144 further provides a self-locking functionality to the ASI 102 once the ASI-p 104 and the ASI-r 106 have mated (i.e., are in fine alignment). The Sarrus linkage 144 is attached to the mating plate 142. The Sarrus linkage 144 is shown in further detail in Figure 6 and discussed in relation thereto hereinbelow. The Sarrus linkage 144 is also driven by rotation of the lead screw 156.

The modified Sarrus mechanism 144 further provides guidance for linear motion that enables a single input to drive several connections together simultaneously, despite imbalance in the forces available for mating the connections.

The ASI 102 may generate a large mechanical advantage over a long stroke length. The length of the links 144 and their locations on the mating plate 142 are selected such that the final mechanical advantage is sufficient to mate the fluid connectors 138, 140 and the electrical connectors 134, 136. As the mating plate 122 advances the lead screw nut 154, the angles of the Sarrus links 144 change, increasing the mechanical advantage throughout the entire mechanism stroke.

Each link 144 is driven over-center when the ASI-p 104 and the ASI-r 106 are mated. The angle of the links 144 amplifies input load to produce a greater output load. The links 144 further self-lock relative to one another.

The active mating subassembly 130 further includes capture arms 148. The capture arms 148 capture alignment features 150 of the passive mating subassembly 132 to effect coarse alignment. Coarse alignment occurs when the capture arms 148 have captured the alignment features 150 such that the mating plate 142 continues moving towards the alignment plate 143 and is substantially aligned thereto. The capture arms 148 accommodate misalignment in 5 degrees of freedom because the alignment features 150 and the capture window 152 fix the 5 degrees of freedom (i.e., all axes except the mating axis 155).

In coarse alignment, the capture arms 148 have aligned the ASI-p 104 to the ASI-r 106 within the compliance capabilities of the electrical connectors 134, 136 and the fluid connectors 138, 140, which further effect fine alignment.

In an embodiment, the fluid connectors 138, 140 are subject to disruptive forces, and the fluid connectors 138, 140 mate and remain mated only so long as the linkage mechanism 144 remains in the self-locking state. Such disruptive forces represent internal pressurization that, absent the capture linkage herein described, would force the ASI-p 104 and the ASI-r 106 apart.

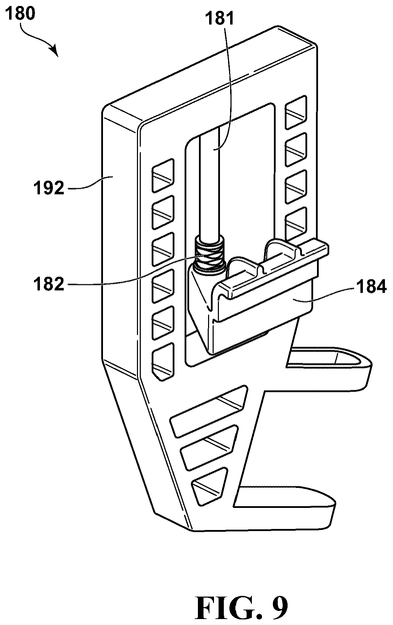

The capture arms 148 produce the necessary forces on the axial compliance mechanisms (see Figure 9) to align the ASI-p 104 to the ASI-r 106 (for coarse alignment) prior to mating the electrical connectors 134, 136 and the fluid connectors 138, 140 (fine alignment). The compliance bracket 184 and the springs 182 move during fine alignment until the Sarrus mechanism 144 goes over center and the ASI 102 enters the self-locked state.

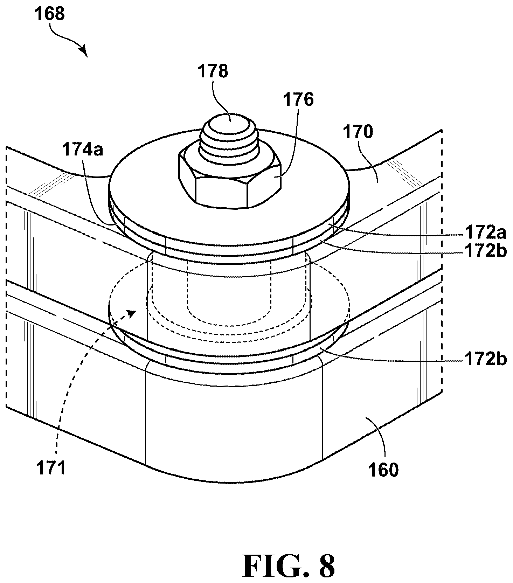

Once the capture arms 148 are fully seated to the alignment features 150, the components shown in Figure 8 no longer move relative to one another.

The capture arms 148 further include respective levers for opening the capture arms 148 for de-mating the ASI-p 104 from the ASI-r 106. The capture arms 148 provide a closed-loop path across the ASI 102 to minimize any additional loads on the alignment features 150.

The capture arms 148 include a capture window 152 for receiving the alignment features 150 of the ASI-r 106 during coarse alignment.

In an embodiment, the alignment features 150 are substantially wedge-shaped or triangular, and a single vertex of the alignment features 150 passes through the capture window 152 during coarse alignment.

In an embodiment, the alignment features 150 are substantially fin-shaped and cover substantially all of a side of the mating plate 142.

The loads transmitted to the alignment features 150 depend upon the axial compliance mechanisms of Figure 9 and the hoses and cable harnesses associated with the auxiliary services.

Once the capture arms 148 are fully seated to the alignment features 150, further turning the input shaft 122 further to mate the ASI-p 104 and the ASI-r 106 causes the ASI 102 to further progress to fine alignment (wherein the fluid connectors 138, 140 finely align, then the electrical connectors 134, 136 finely align), followed by the self-locking state.

The active mating subassembly 130 further includes rollers 146 (or roller bearings 146) for actuating the capture arms 148. The rollers 146 travel along an exterior surface of the capture arms 148 and cause the capture arms 148 to enter a position suitable for coarse alignment as the mating plate 142 moves towards the alignment plate 143. The rollers 146 further selectively prevent the capture arms 148 from detaching from the alignment features 150 during operation by applying pressure on an outer surface of the capture arms 148.

The active mating subassembly 130 further includes the capture window 152 disposed between the capture arms 148 for receiving the alignment features 150. The capture window 152 moves with the capture arms 148 as the capture arms 148 are actuated into the position suitable for coarse alignment.

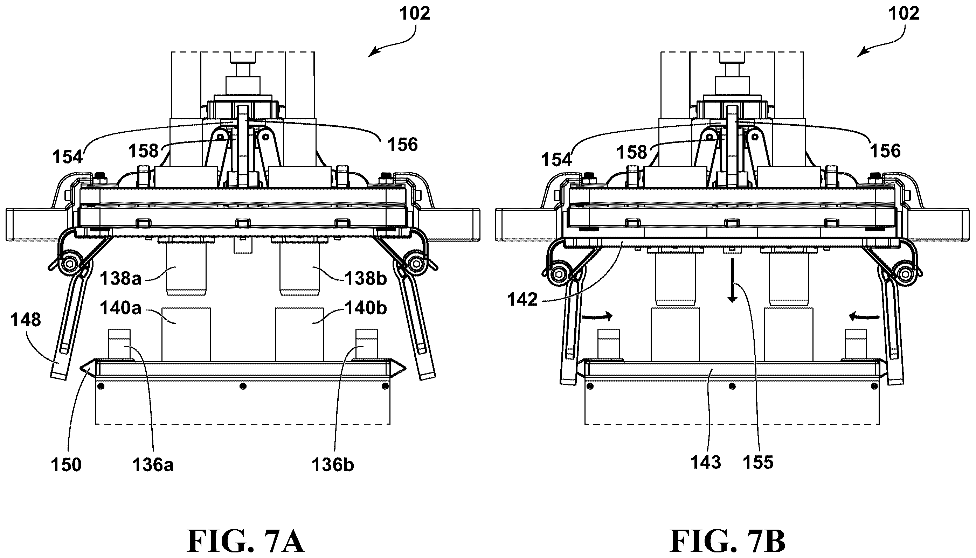

The rollers 146 further lift the respective levers to detach the capture arms 148 for de-mating the ASI-p 104 from the ASI-r 106. The rollers 146 generate increasing leverage as the mating plate 142 and the rollers 146 travel in the mating direction (downwards in Figures 7A-7B) towards the alignment plate 143 and the alignment features 150, respectively.

The rollers 146 may include four custom-designed needle roller bearings press-fit onto a shaft bolted to the mating plate 142.

Upon capturing the alignment features 150, the capture arms 148 are vertical or substantially vertical.

The ASI 102 relies on the washers 172 sliding relative to each other for both halves to align.

The lead screw 156 is affixed to a universal telescopic joint or double universal joint drive shaft 164 that receives torque from the torque mechanism 120 via the input shaft 122.

The lead screw 156 drives the lead screw nut 154 in the mating direction while simultaneously moving the modified Sarrus linkage mechanism 144 connected to a translational frame 160 and the mating plate 142.

The lead screw nut 154 continues to travel until the link 144a moves to a perpendicular position, relative to the links 144b, 144c, to create the self-locking state in the modified Sarrus linkage mechanism 144.

In the self-locking state, the links 144b and 144c have rotated past a colinear position. When the link 144a is in the perpendicular position, axial forces on the lead screw nut 154 are eliminated.

In the self-locking state, resistive forces in the system 100 may not unlock the auxiliary services.

The lead screw nut 154 serves as a powertrain mechanism for the ASI 102 in order to minimize volume thereof. The lead screw nut 154 may be designed to be non-back-drivable under simple axial load conditions.

The active mating subassembly 130 further includes a center nut 158.

The center nut 158 is attached to both the modified Sarrus linkage mechanism 144 and the lead screw nut 154. The center nut 158 transmits the force received at and transmitted from the lead screw nut 154 such that the link 144a moves to the perpendicular position to create the self-locking state.

Accordingly, the system 100 self-locks via the lead screw nut 154 and the modified Sarrus mechanism 144, ensuring the auxiliary services remain mated during operation.

The translational frame 160 does not move relative to. The translational frame 160 is further connected to a movable frame 162.

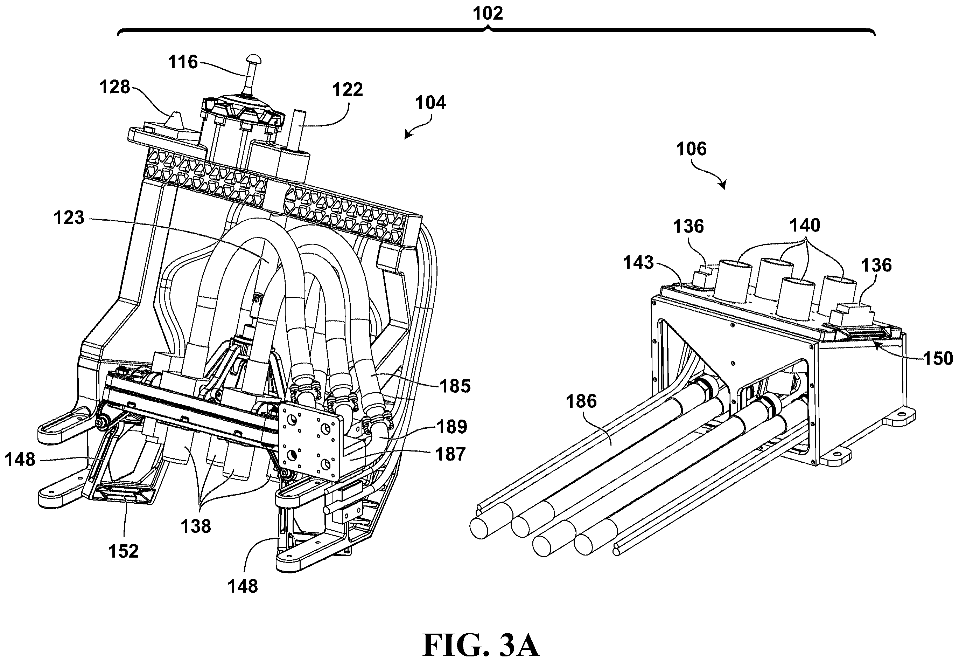

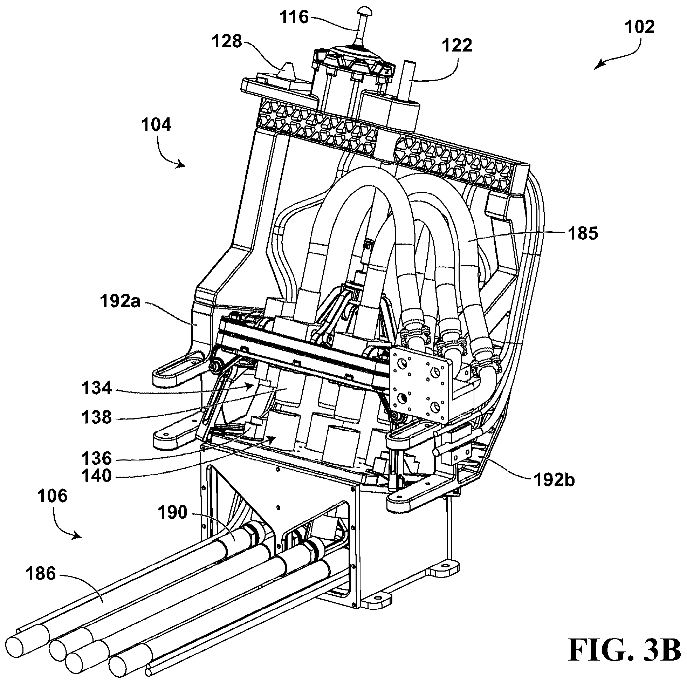

An example embodiment of the auxiliary services interface 102 is shown in Figures 3A and 3B. Figure 3A shows the ASI 102 in an unmated configuration. Figure 3B shows the ASI 102 in a partially mated configuration.

The fluid connectors 138, 140 connect to fluid lines 185, 186 for transferring fluid to an interface and away from the interface.

The fluid lines 185 of the ASI-p 104 accommodate the input shaft 122 and compliance motion of the ASI 102 (e.g., via the lateral compliance mechanism of Figure 8, via the axial compliance mechanism of Figure 9) while remaining within the dimensions of the ASI-p 104. The output stroke length of the input shaft 122 accommodates lateral, axial, and angular compliance motions. The output stroke length is the axial distance travelled by the lead screw nut 154 between start and end positions.

In an embodiment, the fluid lines 185 are hoses with threaded fitting on both ends of each hose. The hose of each fluid line 185 is designed so as not to be bent further than a minimum bend radius when the ASI 102 is mated. The hose of each fluid line 185 accommodates a minimum straight length at each end of each hose. The flexible nature of the hoses allows for compliance of the ASI 102 during coarse alignment and during fine alignment.

The ASI-p 104 further includes a fluid interface block 187 to which the fluid lines 185 connect via fittings 189.

In an embodiment, four springs are provided within the quick-disconnect mechanisms within the fluid connectors 138, 140 to align the ASI-p 104 and the ASI-r 106.

The ASI 102 further includes ASI panel brackets 192a, 192b (collectively referred to as the ASI panel brackets 192 and generically referred to as the ASI panel bracket 192).

Each of the electrical connectors 134, 136 includes a cable harness attached to an electrical interface on the ASI-p 104 and the ASI-r 106, respectively, used to provide auxiliary electrical services between the host platform 111 and the payload 112. Such auxiliary services include power and data services. The electrical connectors 134, 136 include power and data contacts.

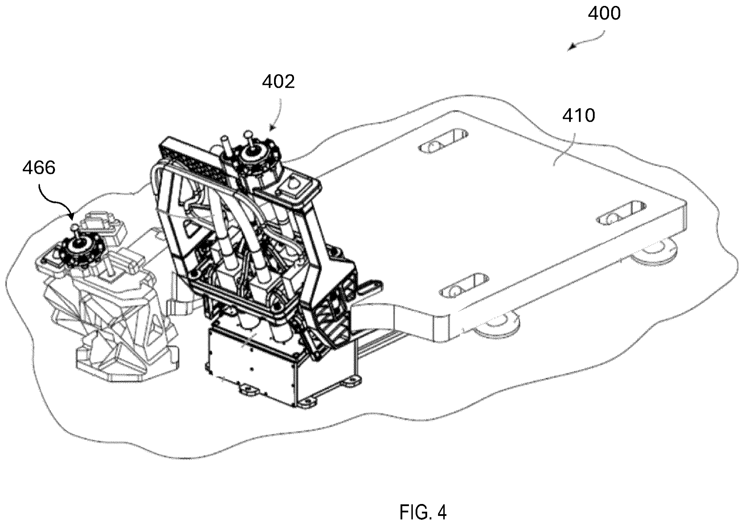

Referring now to Figure 4, shown therein is the ASI 102 of Figures 3A-3B as part of an auxiliary services interfacing system 400, according to an embodiment. To aid in clarity of presentation, some features previously labelled and discussed may not be labelled and discussed again.

The system 400 includes ASI 102, primary auxiliary services interface 166, and payload platform 110. Payload platform 110 is configured to accommodate a payload that receives electrical services (e.g., power, data transfer) and fluid transfer services.

In operation, the robotic manipulator 108 of Figure 1 may capture primary auxiliary services interface 166 using end effector 114 (e.g., by grappling a grapple fixture as described herein). The primary interface 166 may include two halves, an active half and a passive half. The passive half may be mounted to platform 110. The active half may be grappled and rigidized by end effector 114. The robotic manipulator 108 may then manipulate platform 110 through the primary interface 166. The robotic manipulator 108 may then disengage from the primary interface 166 and grapple ASI-p 104 of the ASI 102 via end effector 114. The robotic manipulator 108 may then manipulate the grappled ASI-p 104 towards the ASI-r 106 and begin to engage the two halves 104, 106 of the interface 102. The end effector 114 may provide a torque input through torque mechanism 120 to drive input shaft 122, which drives a tie-down mechanism including lead screw and Sarrus linkage assembly to cause the ASI 102 to self-align, mate, and lock.

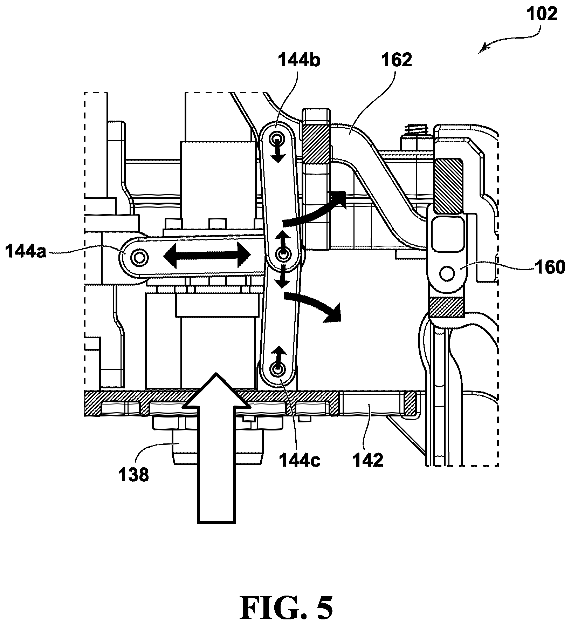

Referring now to Figure 5, shown therein is a close-up perspective view of the auxiliary services interface 102 of Figures 4A-4B after fine alignment in a fully mated and self-locked state, according to an embodiment.

In Figure 5, the modified Sarrus linkage mechanism 144 is clearly visible, with the link 144a in a perpendicular position such that the entire ASI 102 has entered a self-locking state. To aid in clarity of presentation, some features previously labelled and discussed may not be labelled and discussed again. Arrows in Figure 5 show the tension to which the link 144a is subject in the self-locking state and the compression to which the links 144b, 144c are subject in the self-locking state.

In Figure 5, the connection between the modified Sarrus linkage mechanism 144 and the movable frame 162 is further visible. The connection ensures that the mating plate 142 remains substantially parallel to the movable frame 162 at all times.

In Figure 5, resistive forces from the fluid connector 138, 140 and the electrical connectors 134, 136 are present after fine alignment as springs (not shown) within each fluid connector 138, 140 and electrical connector 134, 136 start to compress. The springs continue to compress until the ASI 102 is self-locked (as shown in Figure 5). During the self-locking state, the resistive forces are greater as the springs are fully compressed. Further compression is possible until a hard stop is reached (e.g., as part of an over-travel capability or safety in case an input command overshoots the mated state, e.g., by additional turns of the input shaft 122).

Referring now to Figure 6, shown therein is a close-up front view of part of the alignment, mating, and locking subassembly 130 interfacing with part of the passive mating subassembly 132, according to an embodiment. To aid in clarity of presentation, some features previously labelled and discussed may not be labelled and discussed again.

Rotation of the lead screw 156 drives the lead screw nut 154 in the mating direction. As the lead screw nut 154 is driven in the mating direction, the mating plate 142 moves in the mating direction, causing the rollers 146 to travel in the mating direction along the capture arms 148. The travel of the rollers 146 causes rotational movement of the capture arms 148 towards the alignment plate 143. As the capture arms 148 rotate towards the alignment plate 143, the alignment features 150 projecting from the alignment plate 143 are received by the capture arms 148 at the capture window 152. When the alignment features 150 are received at the capture window 152, the ASI 102 is in coarse alignment and may further proceed to fine alignment.

The movement of the mating plate 142 further causes the link 144a to translate and cause the links 144b and 144c to move towards a more open orientation.

In an embodiment, the alignment features 150 are wedges or triangles as shown in Figure 6 and in Figure 7A.

In an embodiment, the alignment features 150 are fins that span the width of the side of the alignment plate 143 that is adjacent to the capture window 152 in coarse alignment.

Compliance mechanisms align the ASI-p 104 to the ASI-r 106 prior to mating.

In order to unlock the ASI 102 (e.g., to begin de-mating), the lead screw 156 rotates in the reverse direction, i.e., opposite the mating direction (upwards in Figures 7A-7B).

The torque mechanism 120 engages the ASI drive shaft 123 via the input shaft 122, allowing for the transfer of torque from the end effector 114 to the ASI-p 104. This input drives the output force to the alignment, mating, and locking subassembly 130 for the engagement/disengagement of the auxiliary services.

The input shaft 122 generates a total preload to mate the ASI-p 104 and ASI-r 106 while overcoming the resistive loads from the capture arms 148, alignment features 150, electrical connectors 134, 136, and fluid connectors 138, 140.

In an embodiment, the mating plate 142 and the alignment plate 143 are each rotated such that smooth surfaces thereof (e.g., the upper surface of the mating plate 142 shown in Figure 6 is a smooth surface; the upper surface of the alignment plate 143 shown in Figure 6 is not a smooth surface) face each other on the interior of the ASI 102.

In the above rotated embodiment, multi-layer insulation (MLI) may be disposed on each of the inward-facing smooth surfaces of the mating plate 142 and the alignment plate 143 in order to conserve heat or otherwise maintain a desirable temperature within the ASI 102.

Referring now to Figures 7A and 7B, shown therein are close-up perspective views of another part of the alignment, mating, and locking subassembly 130 and the passive mating assembly 132 before and after coarse alignment, respectively. To aid in clarity of presentation, some features previously labelled and discussed may not be labelled and discussed again.

The electrical connectors 136 on the ASI-r 106 include electrical connectors 136a, 136b.

The fluid connectors 138 on the ASI-p 104 include fluid connectors 138a, 138b. In an embodiment, four fluid connectors 138 are provided.

The fluid connectors 140 on the ASI-r 106 include fluid connectors 140a, 140b.

In Figure 7A, the capture arms 148 are rotating towards the alignment features 150 to achieve coarse alignment.

In Figure 7B, the capture window 152 has received the alignment features 150, and coarse alignment has been achieved.

After coarse alignment is achieved, the ASI-p 104 moves further in the mating direction (indicated by the arrow 155) towards the ASI-r 106. Specifically, the mating plate 142, electrical connectors disposed on the ASI-p 104 (not shown), and the fluid connectors 138a, 138b move towards the alignment plate 143, the electrical connectors 136a, 136b, and the fluid connectors 140a, 140b, respectively.

When the electrical connectors on the ASI-p 104 interface with the electrical connectors 136a, 136b, respectively, and the fluid connectors 138a, 138b interface with the fluid connectors 140a, 140b, respectively, fine alignment has been achieved. The fluid connectors 140a, 140b may be able to move slightly in place in order to achieve fine alignment. The fluid connectors 140a, 140b may be able to be moved slightly in place (e.g., by the fluid connectors 138a, 138b if slightly misaligned) in order to achieve fine alignment.

Referring now to Figure 8, shown therein is an elevated perspective view of a lateral compliance mechanism 168 of the ASI 102 disposed atop the translational frame 160, according to an embodiment.

The lateral compliance mechanism 168 includes a compliance frame 170 in which or along which compliance adjustments may be made. The compliance frame 170 is disposed atop the translational frame 160.

The lateral compliance mechanism 168 further includes upper and lower washers 172a, 172b (collectively referred to as the washers 172 and generically referred to as the washer 172) for holding the compliance frame 170 in place relative to the translational frame 160.

The lateral compliance mechanism 168 further includes upper and lower friction pads (not shown) for absorbing friction between the washer 172a and the compliance frame 170 and between the washer 172b and the static frame, respectively.

The lateral compliance mechanism 168 further includes a lock nut 176 threaded along a shoulder bolt 178 for retaining the washer 172a and the compliance frame 170 in place.

Because the shoulder bolt 178 is able to move radially (i.e., relative to a radius of the washer 172) within the compliance frame 170, the ASI 102 is able to absorb or tolerate a degree of misalignment of the ASI-p 104 relative to the ASI-r 106 during or before coarse alignment. The shoulder bolt 178 further facilitates correcting the misalignment during or before fine alignment.

The lateral compliance mechanism 168 allows for translation of the translational frame 160 and the mating plate 142 on the y-z plane (perpendicular to the x axis along which the mating plate 142 approaches the alignment plate 143). The lateral compliance mechanism further allows for rotation of the translational frame 160 and the mating plate 142 by a shoulder bolt 178 fixed at each corner of the translational frame 160 and floating within over-sized holes 171 in the compliance frame 170. A similar hole (not shown) is present in the translational frame 160. The shoulder bolts 178 provide for part containment while allowing motion.

The head of the shoulder bolt 178 is present in the translational frame 160 (not visible in Figure 8).

Referring now to Figure 9, shown therein is a perspective view of an axial compliance mechanism 180 mounted to the ASI panel bracket 192, according to an embodiment. The axial compliance mechanism 180 may advantageously accommodate or absorb a difference or mismatch in height as between the ASI-p 104 and the ASI-r 106. It will be appreciated that the ASI 102 in use includes two such axial compliance mechanisms 180.

The axial compliance mechanism 180 includes a shaft 181 disposed in the ASI panel bracket 192 along an x axis of the ASI 102.

The axial compliance mechanism 180 further includes springs 182 (generically referred to as the spring 182) disposed on the shaft 181 for absorbing misalignment along the x axis. The springs 182 may be wave springs. The springs 182 center the bushing on the shaft 181.

The axial compliance mechanism 180 further includes a compliance bracket 184 connected to the springs 182 for receiving the misalignment along the x axis.

When misalignment along the x axis occurs, the compliance bracket 184 is physically moved by the misaligned component along the x axis. The movement of the compliance bracket 184 causes compression of one of the springs 182. When the force causing the misalignment lessens or is no longer applied to the misaligned component, the compressed spring 182 expands, moving the compliance bracket 184 and the misaligned component into alignment along the x axis.

It will be appreciated by one of skill in the art that fewer or more than two springs 182 may be disposed on the shaft 181 to absorb misalignment.

It will be appreciated by one of skill in the art that more than one shaft 181 and/or further springs 182 may be provided to correct misalignment along different and/or multiple axes. For example, in addition to or instead of the shaft 181 along the x axis, a further shaft along the y axis may be shown with one or more springs disposed thereon in order to receive, absorb, and correct misalignment along the y axis.

The axial compliance mechanism 180 allows for compliance in the x-direction through the use of linear bushings on the shaft 181. A small clearance between the shaft 181 and the bushing is intended to allow for angular compliance.

The compliance mechanisms 168, 180 account for misalignment between the ASI-p 104 and the ASI-r 106, allowing for adjustments in all six degrees of freedom once alignment begins. Such allowance may be up to 1 mm along any axis (e.g., along the direction of travel 155) and up to +/- 1 degree along any axis (e.g., along the longitudinal FC axis).

The ASI-p 104 and the ASI-r 106 may be captured and aligned within +/- 1 mm along the y-z plane and +/- 1 degree about the y and z axes (wobble around the x axis) to ensure the fluid connectors 138, 140 can mate.

The compliance bracket 184 accommodates coarse alignment in the vertical direction (i.e., along the mating axis 155).

The translational frame 160 can translate horizontally relative to the compliance frame 170, but neither component translates vertically during coarse alignment. Once the capture arms 148 and the alignment features 150 are mated (fine alignment), the translational frame 160 and the compliance frame 170 no longer move relative to one another.

The mating plate 142 translates vertically only after the ASI 102 is coarsely aligned, to facilitate fine alignment followed by self-locking.

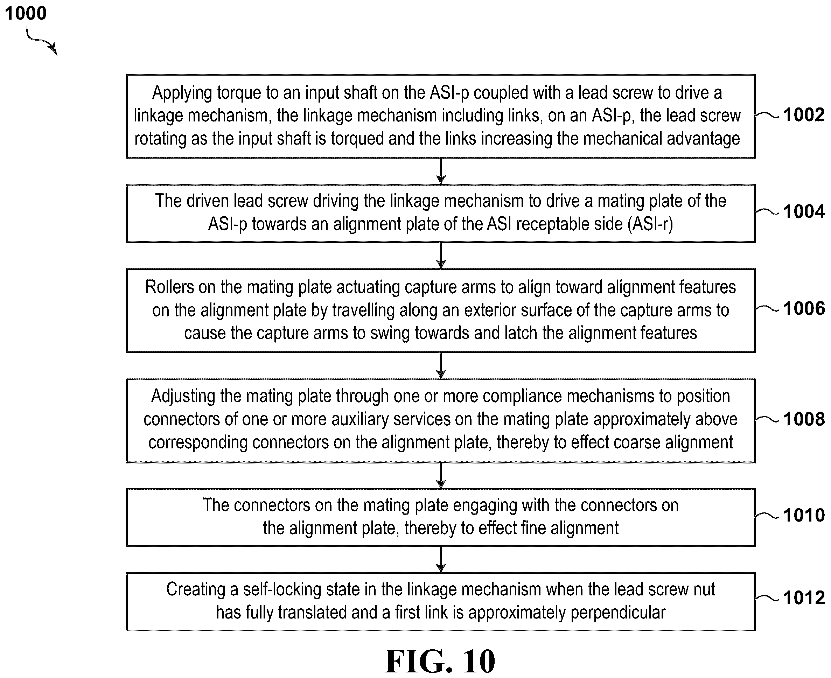

Referring now to Figure 10, shown therein is a method 1000 of mating two halves of an auxiliary services interface, according to an embodiment. The method 1000 may be applied to the ASI-p 104 and the ASI-r 106.

At 1002, the method 1000 includes applying torque to an input shaft on the ASI-p coupled with a lead screw to drive a linkage mechanism, the linkage mechanism including links, on an ASI-p, the lead screw rotating as the input shaft is torqued and the links increase the mechanical advantage from the lead screw and the lead nut and facilitate the self-locking condition.

When the links of the linkage mechanism are increasing the mechanical advantage from the lead screw and the lead nut and facilitating the self-locking condition, it is understood that a first link (e.g., the link 144a) is becoming approximately perpendicular to the other links, and second and third links (e.g., the links 144b, 144c) are becoming approximately colinear.

At 1004, the method 1000 further includes the driven lead screw drives the linkage mechanism to further drive a mating plate of the ASI-p towards an alignment plate of an ASI-r.

At 1006, the method 1000 further includes rollers actuating capture arms to align toward alignment features on the alignment plate by travelling in a mating direction along an exterior surface of the capture arms to cause the capture arms to swing towards and engage with the alignment features. Such engagement may be considering latching with or onto the alignment features.

At 1008, the method 1000 further includes adjusting the mating plate through one or more compliance mechanisms to position at least one connector of one or more auxiliary services disposed on the mating plate approximately above at least one corresponding connector disposed on the alignment plate. When the at least one connector disposed on the mating plate is positioned approximately above the at least one connector disposed on the alignment plate, coarse alignment is achieved.

The one or more compliance mechanisms may include any one or more of the lateral compliance mechanism 168 of Figure 8 and the axial compliance mechanism 180 of Figure 9.

The ASI-p 104 is further able to perform minor coarse angular compliance and/or accommodate or absorb minor coarse angular misalignment. Each of the four corners of the ASI-p 104 shown in Figure 8 corresponds to a lateral compliance mechanism 168 included in the ASI-p 104. The ASI-p 104 is able to rotate about the mating axis 155 within the limits of the pattern of the four shoulder bolts 178 rotating with the patterns of the respective over-sized holes 171 in the compliance frame 170 and the similar holes (not shown) in the translational frame 160.

In the axial compliance mechanism 180, clearance may be provided between the compliance bracket 184 and the shaft 181. Such clearance may accommodate both translation and rotation analogous to the accommodation provided by the lateral compliance mechanism 168. Such clearance may further perform minor coarse angular compliance and/or accommodate or absorb minor coarse angular misalignment in two axes.

Angular compliance for fine alignment may be handled separately by each fluid connector 138, 140 and each electrical connector 134, 136.

At 1010, the method 1000 further includes the at least one connector disposed on the mating plate engaging with the at least one connector disposed on the alignment plate. When the connectors engage, fine alignment is achieved, and auxiliary services are provided.

The connectors may include any one or more of fluid connectors for providing fluid auxiliary services and electrical connectors for providing power auxiliary services and/or data auxiliary services. The fluid connectors may include quick-disconnect functionality. The quick-disconnect functionality includes connecting and disconnecting with a single operation, e.g., a single translational motion. The quick-disconnect functionality may enable mating and de-mating a plurality of quick-disconnect components at the same time.

When both the fluid connectors and the electrical connectors are provided, the fluid connectors may mate first in order to align the ASI-p and the ASI-r so that the electrical connectors may mate.

At 1012, the method 1000 further includes creating a self-locking state in the linkage mechanism when the lead screw nut has fully translated and the first link is approximately perpendicular.

At 1012, second and third links are approximately colinear.

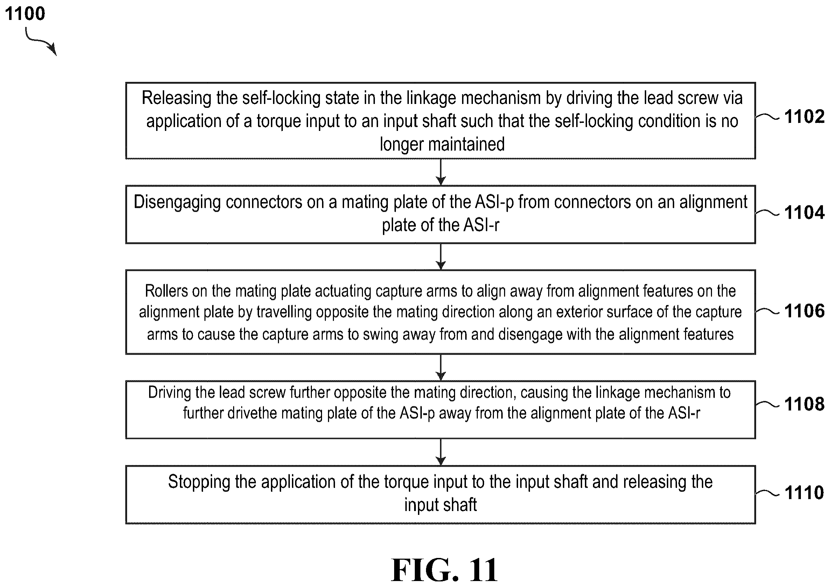

Referring now to Figure 11, shown therein is a method 1100 of de-mating two halves of an auxiliary services interface provided in a self-locking state, the self-locking state provided when second and third links cross past an over-center configuration, putting a first link in tension, in a direction orthogonal to an axis of the lead screw, thereby eliminating any back-driving force on the lead nut, creating the self-locking condition. The method 1100 may be applied to the ASI-p 104 and the ASI-r 106.

At 1102, the method 1100 includes releasing the self-locking state in the linkage mechanism by driving the lead screw via application of a torque input to an input shaft such that the self-locking condition is no longer maintained. The applied torque input is in the direction opposite to that of 1002 of Figure 10.

At 1104, the method 1100 further includes disengaging at least one connector disposed on a mating plate of the ASI-p from at least one connector disposed on an alignment plate of the ASI-r. When the connectors engage, fine alignment is achieved, and auxiliary services are provided. When the connectors disengage, fine alignment is disrupted, and auxiliary services cease to be provided.

When the at least one connector on the mating plate is positioned approximately above the at least one connector on the alignment plate but is not engaged thereby or connected therewith or thereto, coarse alignment is achieved.

The connectors may include any one or more of fluid connectors for providing fluid auxiliary services and electrical connectors for providing power auxiliary services and/or data auxiliary services.

At 1106, the method 1100 further includes rollers actuating capture arms to align away from alignment features on the alignment plate by travelling opposite the mating direction along an exterior surface of the capture arms to cause the capture arms to swing away from and disengage with the alignment features.

The capture arms may include one or more levers that the rollers arms lift in order to cause the capture arms to disengage from the alignment features.

The curvature of the capture arms is such that the rollers swing the capture arms outward (away from the alignment plate) to disengage the capture arms from the alignment features.

At 1108, the method 1100 further includes driving the lead screw further opposite the mating direction, causing the linkage mechanism to further drive the mating plate of the ASI-p away from the alignment plate of the ASI-r.

At 1110, the method 1100 includes stopping the application of the torque input to the input shaft and releasing the input shaft.

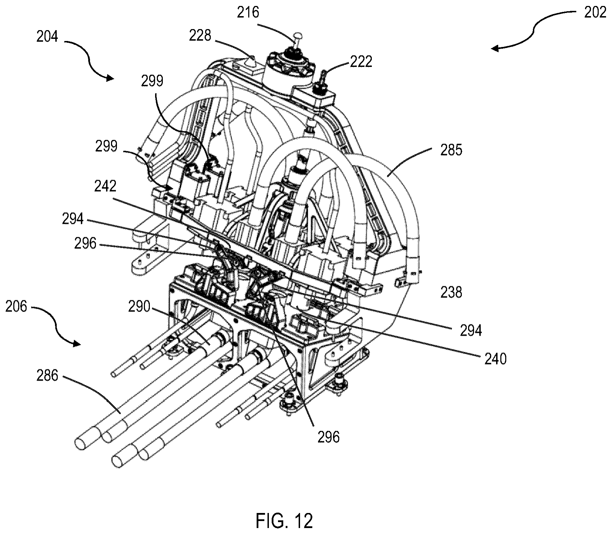

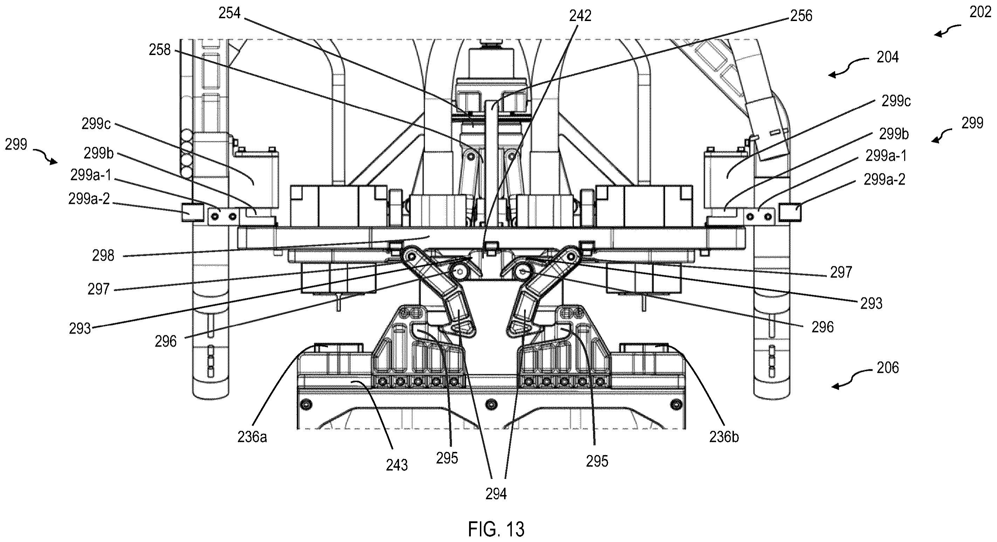

Referring now to Figures 12 and 13, shown therein are a perspective view of an auxiliary services interface 202 in a partially mated configuration and a front view of an alignment, mating, and locking subassembly of the ASI 202 interfacing with part of the passive mating subassembly of the ASI 202, according to another embodiment. Like numerals denote like references with respect to Figures 3B, 7A, and 7B.

The ASI 202, specifically the ASI-p 204, includes latch arms 294 attached to an outer frame 298 at pins 297.

The ASI-p 204 further includes latch rollers 296. The latch rollers 296 are configured to actuate the latch arms 294. Specifically, as the mating plate 242 lowers towards the alignment plate 243, the rollers 296 cause the latch arms 294 to pivot about the pins 297, thereby causing the latch arms 296 to hook outwardly into the ASI-r 206 at catches 295 thereof, thereby bringing the ASI-r 206 into coarse alignment with the ASI-p 204.

The outer frame 298 and the mating plate 242 are connected such that movement of one also moves the other. The outer frame 298 further includes one or more spring-loaded plunger assemblies 299 (of which two instances are shown in Figure 12) to allow for greater lateral draft, thereby providing additional degrees of freedom. Accordingly, the outer frame 298 provides for omnidirectional or substantially omnidirectional compliance of the ASI-p 204 relative to the ASI-r 206, by action of the latch arms 294 hooking into the catches 295.

As shown in more detail in Figure 13, each spring-loaded plunger assembly 299 comprises one or more adjustable stops 299a-1, 299a-2 that are adjustable in position, a spring-loaded plunger 299b that together with the stops 299a-1, 299a-2 and the mating plate 242 controls and limits the position of the outer frame 298, and a housing and cap 299c that biases the assembly 299c (e.g., holding a spring (not shown) and pushing the plunger 299b down).

The outer frame 298 is constrained by the assemblies 299 and by the mating plate 242, which allow motion within a range that corresponds with a capture capability of the latch arms 294 with the catches 295, such compliance and capture capability being configured to accommodate possible misalignments between the ASI-p 204 and the ASI-r 206 as a result of manufacturing variances, thermal distortions, loads, and any other applicable influences

The plungers 299b bias the ASI 202 in the mating direction to provide for less range of possible vertical misalignment between the ASI-p 204 and the ASI-r 206.

When the latch arms 294 hook into the catches 295, such connection advantageously resists the mating loads of the auxiliary services provided as discussed herein, stopping the ASI-p 204 and the ASI-r 206 from separating. Such connection further advantageously assists in achieving coarse alignment. The latch rollers 296 cause the latch arms 294 to enter a state from which the latch arms 294 do not exit until the latch rollers 296 retract, causing the latch arms 294 to swing away from the catches 295 via engagement of the rollers 296 into unlatch hooks 293 on the latch arms 294.

As in the previous embodiment, the entire alignment and mating of the ASI-p 204 and the ASI-r 206 is driven from a single input provided at the grapple fixture 216. Such input may be provided by robotic or manual actuation, e.g., by a torque providing mechanism 118 of the end effector 114, by an astronaut manually using a wrench or other torquing tool.

While the above description provides examples of one or more apparatus, methods, or systems, it will be appreciated that other apparatus, methods, or systems may be within the scope of the claims as interpreted by one of skill in the art.

## Claims

1. A system for autonomously mating auxiliary services of a payload with a spacecraft across an auxiliary service interface comprising a payload half and a first spacecraft half, the system comprising:
one or more payload-side auxiliary service connectors;
respective one or more spacecraft-side auxiliary service connectors for connecting with the one or more payload-side auxiliary service connectors;
a mating plate on the payload half configured to be driven towards an alignment plate on the first spacecraft half, the one or more payload-side auxiliary service connectors disposed on the mating plate and the respective one or more spacecraft-side auxiliary service connectors disposed on the alignment plate; and
capture arms disposed on the payload half configured to be driven into contact with the alignment plate to bring the one or more payload-side auxiliary service connectors on the mating plate into coarse alignment with the respective one or more spacecraft-side auxiliary service connectors on the alignment plate;
wherein the one or more payload-side auxiliary service connectors are configured to mate with the respective one or more spacecraft-side auxiliary service connectors when the connectors are in fine alignment until the auxiliary services interface reaches a self-locking state, and wherein in the self-locking state the one or more payload-side auxiliary service connectors are fully mated to the respective one or more spacecraft-side auxiliary service connectors and are retained in a mated state.

2. The system of claim 1, wherein the payload half further comprises an input shaft configured to receive a torque input to drive the mating plate towards the alignment plate, to drive the capture arms into contact with the alignment plate, and to cause the one or more payload-side auxiliary service connectors to engage with the respective one or more spacecraft-side auxiliary service connectors.

3. The system of claim 2, wherein the payload half further comprises a screw coupled to the input shaft, and wherein torque is provided to the input shaft to rotate the screw, and wherein the torque is provided via a torque-driving tool operated by a robot or by a human.

4. The system of claim 1 further comprising rollers for driving the capture arms, the rollers configured to be actuated as the mating plate is driven towards the alignment plate.

5. The system of claim 1, wherein the capture arms are configured to latch onto projections of the alignment plate or onto catches of the alignment plate.

6. The system of claim 1 further comprising a grapple fixture for engaging with an end effector of a robotic arm, the robotic arm configured to grapple the payload half of the auxiliary services interface and move the auxiliary services interface to a second spacecraft half located on a spacecraft at a location different to a location on the spacecraft of the first spacecraft half.

7. The system of claim 2, wherein the auxiliary services are autonomously mated when the torque is applied in a first direction, and wherein the auxiliary services are autonomously de-mated when the torque is applied in a second direction opposite to the first direction.

8. The system of claim 1, wherein for each respective pair of connectors among the one or more payload-side auxiliary service connectors and the one or more spacecraft-side auxiliary service connectors, at least one connector has a capture and alignment capability with the other connector for accommodating error and allowing self-alignment, thereby achieving the fine alignment.

9. A method of autonomously mating auxiliary services of a payload with a spacecraft across an auxiliary services interface comprising a payload half and a first spacecraft half, the method comprising:
driving a mating plate on the payload half towards an alignment plate on the first spacecraft half, the mating plate comprising one or more payload-side auxiliary service connectors and the alignment plate comprising one or more spacecraft-side auxiliary service connectors;
driving capture arms on the payload half into contact with the alignment plate to bring the one or more payload-side auxiliary service connectors on the mating plate into coarse alignment with the respective one or more spacecraft-side auxiliary service connectors on the alignment plate; and
mating the one or more payload-side auxiliary service connectors with the respective one or more spacecraft-side auxiliary service connectors, when the connectors are in fine alignment, until the auxiliary services interface reaches a self-locking state, wherein in the self-locking state the one or more payload-side auxiliary service connectors are fully mated to the respective one or more spacecraft-side auxiliary service connectors and are retained in a mated state.

10. The method of claim 9 further comprising providing a torque input to drive an input shaft on the payload half, wherein providing the torque input drives the mating plate towards the alignment plate, drives the capture arms into contact with the alignment plate, and causes the one or more payload-side auxiliary service connectors to engage with the respective one or more spacecraft-side auxiliary service connectors.

11. The method of claim 10 further comprising providing the torque input to rotate a screw coupled to the input shaft, wherein the torque is provided via a torque-driving tool operated by a robot or by a human.

12. The method of claim 9, wherein the capture arms are driven by rollers that are actuated as the mating plate is driven towards the alignment plate, and wherein the capture arms are configured to latch onto projections of the alignment plate or onto catches of the alignment plate.

13. The method of claim 9 further comprising a grapple fixture of the auxiliary services interface engaging with an end effector of a robotic arm, the robotic arm configured to grapple the payload half of the auxiliary services interface and move the auxiliary services interface to a second spacecraft half located on a spacecraft at a location different to a location on the spacecraft of the first spacecraft half.

14. The method of claim 9, wherein the auxiliary services are autonomously mated when the torque is applied in a first direction, and wherein the auxiliary services are autonomously de-mated when the torque is applied in a second direction opposite to the first direction.

15. The method of claim 9, wherein for each respective pair of connectors among the one or more payload-side auxiliary service connectors and the one or more spacecraft-side auxiliary service connectors, at least one connector has a capture and alignment capability with the other connector for accommodating error and allowing self-alignment, thereby achieving the fine alignment.
